# EUROPEAN PATENT APPLICATION

(11) **EP 4 686 827 A1**
(43) Date of publication of application: **04.02.2026**
(21) Application number: 24192509.8
(22) Date of filing: 02.08.2024
(51) Int. Cl.: F03D 7/02, F03D 80/50, B63B 35/44

(54) **MOTION CONTROL OF AN OFFSHORE WIND TURBINE**

(71) Applicant: Siemens Gamesa Renewable Energy A/S, 7330 Brande (DK)
(72) Inventor: Soerensen, Johnny, 6920 Videbaek (DK); Esbensen, Thomas, 7400 Herning (DK); Hoegh, Gustav, 7100 Vejle (DK)
(74) Representative: SGRE-Association

(57) **Abstract**

A method of controlling a motion of an offshore wind turbine (OWT) is provided. The OWT (100) comprises a tower (101), a wind turbine rotor (102), and a generator (120), wherein the generator (120) is mechanically coupled to the wind turbine rotor (102) and is configured to convert mechanical power to electrical power. The method comprises operating the OWT in an active motion control mode in which a motion of the OWT is controlled. Operation in the active motion control mode comprises operating the wind turbine rotor (102) to cause an application of a torque and/or force to an upper part of the tower (101) of the OWT to control the motion of the OWT. The wind turbine rotor (102) is operated by actively controlling a torque applied by the generator (120) to the wind turbine rotor (102).

## Description

### FIELD OF THE INVENTION

The present invention relates to a method of controlling a motion of an offshore wind turbine (OWT), and to a respective control system. It further relates to a computer program for controlling the operation of an offshore wind turbine, in particular of a floating offshore wind turbine.

### BACKGROUND

The number of installed wind turbines is continuously increasing. Wind turbines are often installed in offshore environments, as these benefit from relatively high and constant wind speeds and as onshore installation sites may not be available in the required quantity. For installing offshore wind turbines in deeper waters, large monopiles may for example be used that reach down to deep installation positions. It is further known to use floating wind turbines that have a floater which is moored to the sea floor.

Servicing of such types of wind turbines is generally difficult. In deeper waters, the sea state is often characterized by large waves generated by strong winds. Only few time windows may thus exist for servicing the wind turbines, as it may be unsafe in large wave conditions and/or during strong currents and winds to transfer service personnel to the wind turbine or to work in the wind turbine, in particular in a nacelle of the wind turbine. The nacelle of a tall wind turbine may swing with an oscillation amplitude of more than two meters even in relatively calm seas, which may make work within the nacelle impossible. Further, the motion of the floating wind turbine on the sea surface may make a safe transfer of service personnel impossible.

It is thus desirable to improve the servicability of respective offshore wind turbines.

### SUMMARY

This need is met by the features of the independent claims. The dependent claims describe embodiments of the invention.

According to an aspect of the invention, a method of controlling a motion of an offshore wind turbine (OWT) is provided. The OWT comprises a tower, a wind turbine rotor, and a generator. The generator is mechanically coupled to the wind turbine rotor and is configured to convert mechanical power received from the rotor into electrical power. The method comprises operating the OWT in an active motion control mode in which a motion of the OWT is controlled. Operation in the active motion control mode comprises operating the wind turbine rotor to cause an application of a torque and/or force to an upper part of the tower of the OWT to control the motion of the OWT. The wind turbine rotor is operated by actively controlling a torque applied by the generator to the wind turbine rotor.

By such operating mode, it may become possible to actively control the motion of such offshore wind turbine. The motion may in particular be controlled so as to reduce an oscillating motion of the wind turbine and/or to move the wind turbine to a desired position and/or to stabilize the wind turbine at a position. Preferably, a roll motion and/or a translational motion of the OWT may be controlled. Actively controlling the torque applied by the generator to the wind turbine rotor may for example correspondingly control the counter torque applied by the generator to the mounting point of the generator, which may be mounted directly or indirectly (e.g. via the nacelle) to the top of the tower. Further, by applying torque to the rotor, thus rotating the wind turbine rotor, thrust may be generated and a respective thrust force may be applied to the top of the tower of the OWT. Depending on how the wind turbine rotor main shaft is supported, the thrust force may be applied via a respective support, via the generator or the like.

The active motion control mode may in particular be configured to control the torque applied to the rotor so as to counteract motions of the OWT induced by environmental conditions at the position of the OWT. Examples are a drift motion, an oscillating motion, and the like. Such active motion control mode may thus allow control of the motion in such way that servicing of the OWT is facilitated and safety is increased. Further, it may allow an extension of the windows during which the OWT may be serviced, it may for example allow the servicing of the OWT at higher waves, larger currents, and/or stronger winds. Such control mode may further allow a positioning of the OWT to the desired position.

Also, by such active control of the motion of the OWT, the work environment for offshore service personnel may be improved, as the nacelle oscillation may for example be reduced by respective torque application. Working efficiency may thereby further be improved. The working window, in particular weather window, for working in the nacelle may be extended, and the offshore working hours may thereby be extended. This may further result in reduced costs for servicing the OWT. Accordingly, several benefits may be provided by such active motion control mode, so that overall, the OWT servicing may be improved and facilitated.

The generator may for example be mounted to a nacelle which is mounted to an upper part of the tower, or may in other configurations directly be mounted on a tower top, such as via a support structure to which a nacelle is also attached, e.g. via a bed frame, or via a direct drive generator support structure. When operating the wind turbine rotor, the resulting torque and/or force may thus be transferred from the generator, or from a suspension of the wind turbine rotor, via a respective mounting structure to the upper part of the tower, in particular to a top of the tower.

In an embodiment, the generator of the OWT does not generate electrical power in the active motion control mode. The power production of the OWT may for example be shut down in the active motion control mode. The mode may for example be a mode for servicing the wind turbine. Rotation of the wind turbine rotor may thus be limited to the rotation for controlling the OWT motion. This may further improve safety.

Actively controlling a torque applied by the generator to the wind turbine rotor may comprise operating the generator in a motor mode in which the generator receives electrical power (for example from a power grid, such as wind farm grid, or from a offshore electrical connection) and uses the received electrical power to generate the torque. Generally, such OWT is coupled to an onshore link via which generated electrical power is transported onshore, and via which electrical power may be received. Also, other wind turbines of the wind farm may feed electrical power into a local wind farm grid, from which the OWT may receive electrical power. As another possibility, the electrical power may be generated locally at the wind turbine or in the wind farm, or stored locally, and may be provided to the OWT. Any combination of the above may be employed.

The OWT may for example comprise a power converter electrically coupled to the generator, and the torque applied by the generator to the wind turbine rotor may be controlled by controlling electrical power exchanged between the power converter and the generator, e.g. provided from the power converter to the generator. The power converter may thus be a bidirectional power converter that may for example be controlled to act as a variable speed drive to drive the generator as a motor using respective torque and/or speed set points.

In an embodiment, the method further comprises operating a yaw drive of the OWT to control a direction in which the force and/or torque is applied by operating the wind turbine rotor. For example, by operating the yaw drive of the OWT, the orientation of the wind turbine rotor may be adjusted, and thus a direction may be adjusted in which a OWT motion is to be damped and/or in which the OWT is to be moved or stabilized. Damping by torque application via the rotor may for example occur in a direction substantially parallel to the rotor plane, which may be adjusted by controlling the yaw direction of the rotor. Similarly, controlling the yaw direction of the rotor using the yaw drive may allow adjusting the direction in which a thrust force is generated.

The OWT may in particular be a floating offshore wind turbine (FOWT). Such FOWT may have a floater, which may for example be of a spar type or semi-submersible type, or any other known type. Such floater may be moored by a mooring system to the sea floor. Such mooring system may for example comprise at least two or at least three anchors and respective mooring lines that couple the anchors to the floater.

In an embodiment, the active motion control mode comprises a service mode in which the wind turbine rotor is operated to damp an oscillating motion of a nacelle of the OWT. The oscillating motion may in particular correspond to a tower top side-to-side motion of the OWT, which may be damped. This may for example be caused by a floater roll motion of an FOWT. Such side-to-side displacement of the tower top and thus of the nacelle may also occur in a monopile OWT which may be installed at a deep installation site and/or soft ground conditions at the installation site. Preferably, a side-to-side nacelle motion caused by a roll motion about a roll axis of the floater is damped.

By applying a respective torque to the wind turbine rotor via the generator, the rotor inertia may be used to effect the damping.

The method may further comprise obtaining a sensor signal indicative of the oscillating motion of the OWT and controlling, by a controller, the torque application by the generator using the obtained sensor signal. Torque may for example be applied in counter-phase to the oscillating motion. Such sensor may for example be or include an inclinometer, an accelerometer, an inertial measurement unit (IMU), or any other sensor suitable to monitor or measure the oscillating motion of the OWT.

To dampen the motion, the generator is preferably controlled to rotate the wind turbine rotor in accordance with a control scheme configured to counteract the oscillating motion of the OWT. The control scheme may comprise a first operating mode comprising an alternating clockwise and counter-clockwise rotation of the wind turbine rotor and/or a second operating mode comprising a modulated rotation of the wind turbine rotor in one direction of rotation. The parameter controlled by the control scheme may be torque and/or angular position of the rotor and/or rotational speed. Preferably, torque is controlled. In the first operating mode, the control scheme may for example comprise a sinusoidal or square-shaped control signal, or any other desired shape between these two shapes. Torque application may thus be modulated so as to counteract the oscillating motion of the OWT.

In an example, in the first and/or second operating mode, the generator may be controlled to apply a pulsed torque to the wind turbine rotor. By such pulses, the big inertia of the wind turbine rotor may be used to apply respective high torques and/or forces to the tower top of the OWT, thus providing increased damping. Such pulse may for example include a rising flank that has a slope between a step function and a maximum slope of a sine function for the respective oscillation period and torque amplitude. By means of such relatively steep slope, a high amount of damping may be achieved, so that also larger oscillating motions of the wind turbine may efficiently be damped.

In the second operating mode, the pulsed torque may for example be applied during the same half wave of the oscillating motion to counteract the oscillating motion. Even though the rotor is only rotated in one direction, the oscillating motion may still efficiency be damped such way.

The control scheme may have the same period as the oscillation.

Such service mode in which the oscillating motion of the nacelle is damped may for example be useful for allowing technicians to work inside the nacelle. Such service mode may accordingly be engaged while service personnel is being present in a nacelle of the OWT. The service mode may for example be engaged after service personnel and/or service equipment has been transferred to the OWT, e.g. after disengaging a gangway between a floating vessel and the OWT.

Such oscillating motion of the nacelle may correspond to rolling motion of the floater, so that damping the oscillating motion also damps the roll motion of the floater. Accordingly, it may also be beneficial to engage the service mode prior to coupling a gangway from a floating vessel to the OWT, since the floater motion may thereby be reduced. Transfer of service personnel and/or service equipment may thus be made safer.

Further, the service mode may also be engaged prior to lifting equipment to a top of the tower of the OWT, e.g. into the nacelle, to the top of the nacelle or the like. Damping the oscillating motion of the nacelle may facilitate such lifting, in particular hoisting, of respective equipment.

The method may comprise yawing the OWT, in particular a nacelle thereof, such that an angle between a yaw direction of a rotor plane of the wind turbine rotor and a yaw direction of a maximum oscillation amplitude of the oscillating motion is reduced, or yawing the OWT to a predetermined yaw direction. For example, it may be yawed such that the rotor plane is (substantially) parallel to the yaw direction of the maximum oscillation amplitude, and/or such that a rotational axis of the wind turbine rotor is (substantially) perpendicular to the yaw direction of the maximum oscillation amplitude.

In the service mode, this may allow an effective damping of the largest oscillation amplitude, or an effective damping in the desired direction, for example in a desired transfer direction in which a gangway is to be coupled to the OWT. The yaw direction may for example be manually selected, e.g. via remote control, such as via SCADA, or on the turbine, e.g. via a human machine interface (HMI). The service team may thus set the damping to the desired direction.

For damping the maximum oscillation amplitude, the yaw drive may be operated to set a plane of the wind turbine rotor substantially parallel to the yaw direction of the maximum oscillation amplitude. In other words, the roll direction of the OWT motion may be set to the yaw direction of the maximum oscillation amplitude by yawing the wind turbine rotor.

Operation of the wind turbine rotor to damp the oscillating motion may be started after yawing of the OWT, i.e. after operating the yaw drive to bring the wind turbine rotor into alignment with the yaw direction of the maximum oscillation amplitude.

The method may further comprise obtaining a sensor signal indicative of the oscillating motion of the nacelle in at least two distinct and non-parallel directions and determining, from the sensor signal, the yaw direction of the maximum oscillation amplitude of the oscillating motion. The yaw direction of the maximum oscillation amplitude may for example be determined with respect to the current yaw direction of the wind turbine. Monitored or measured quantities may for example be position, velocity and/or acceleration. Position and/or acceleration of side-to-side motion and fore-aft motion of tower/nacelle may be used, and/or roll and pitch motion may be monitored, e.g. by measuring respective angles, velocities, accelerations, inclinations and the like of floater, platform, tower, and/or nacelle. Sensors that may be employed include one or a combination of accelerometers, inclinometers, gyro sensors, leveling sensors, integrated sensors (IMU etc.) and positioning systems (GNSS). It is also possible to obtain respective monitoring data from other monitoring systems, such as from a buoy, a wave radar, and/or other met ocean measurements. Also it is possible to use a prediction of the sea condition, e.g. based on respective measurements, to estimate the yaw direction of the maximum oscillation amplitude.

The yawing of the OWT may comprise determining the yaw angle to which the OWT is to be yawed under consideration of one or more yaw angle ranges defined with respect to a wind direction and associated with an increased risk of wind turbine vibration. The yaw angle may be determined to avoid the one or more yaw angle ranges and/or to reduce the risk. This may reduce fatigue loading of the OWT and may furthermore reduce the risk of dangerous OWT vibrations. Such wind turbine vibrations generally depend on the wind direction. The wind direction may be independent from a direction of a maximum oscillation amplitude, which may for example depend on wave direction.

The vibration may for example comprise a vortex-induced vibration (VIV) and/or a stall-induced vibration (SIV).

The yaw angle of the OWT may for example be determined to avoid the one or more yaw angle ranges by determining the yaw angle outside of the one or more yaw angle ranges. Although the resulting yaw direction may be not optimal for damping the maximum oscillation amplitude of the oscillating motion, it may significantly increase safety and reduce loads.

As another example, the yaw angle may be determined by using a cost function or weighting function configured to maximize the oscillation amplitude at the yaw angle and to minimize the risk of vibration at the yaw angle. Such approach may thus optimize the operation by providing damping of relatively high oscillation amplitudes while reducing the risk of vibration to an acceptable level.

As an example, a yaw angle range in which the risk of OWT vibrations is low, may be a range of ±45° from the wind direction. The yaw angle may be determined to lie within this range to avoid respective vibrations. This is however only an example, since the ranges in which wind turbine vibrations may occur, depend on the particular type and size of wind turbine.

In a further embodiment, the active motion control mode comprises a transfer mode in which the wind turbine rotor is operated to generate a thrust force that acts on the OWT to move the OWT and/or stabilize a position of the OWT. This may further increase the safety for servicing the OWT. For example, the danger may be reduced that the OWT drifts away while a gangway is coupled between a floating vessel and the OWT, wherein such floating vessel generally employs dynamic positioning to maintain its position. Also, it may reduce the danger that the OWT drifts into an anchored or dynamically positioned vessel that is located adjacent to the OWT during servicing of the OWT. The transfer mode may in particular allow a safe and secure transfer of service personnel and/or service equipment between vessel and OWT.

The thrust force may for example be controlled by controlling the generator to rotate the wind turbine rotor at a rotational speed that causes an airflow that generates the desired thrust. Speed control of the wind turbine rotor may for example be employed. The power converter coupled to the generator may for example be operated as a variable speed drive to control the rotor speed and thus the thrust force.

Preferably, the OWT is moved by the thrust force until one or more anchor lines that moor the OWT are tensioned. By such tensioning of the anchor line, the OWT is brought into a well-defined position and, by continued application of the thrust, may be maintained in such well-defined position. This may further improve and facilitate transfer of service personnel and service equipment, also in higher seas.

For example, the method may further comprise determining a transfer direction in a yaw angle direction of the OWT in which a transfer (e.g., of service personnel and/or equipment) is to take place between the OWT and a floating vessel. Further, the yaw angle of the wind turbine may be controlled based on the determined transfer direction. This way, it may be ensured that the anchor lines are for example tensioned in such a direction that reduces a risk of the OWT moving further away from a dynamically positioned vessel during transfer of service personnel and/or equipment.

The yaw angle may be adjusted to the determined direction and wind turbine rotor may be operated to generate the thrust so that the OWT is moved in the determined yaw direction and is stably positioned in this direction upon tensioning of the anchor lines. The yaw drive may for example be operated until the wind turbine rotor points into the desired yaw direction, and the rotor may be rotated such that the generated thrust pushes the wind turbine into the determined yaw direction, i.e. in the direction into which the wind turbine rotor points.

For example, the yaw angles may be set outside a range between ±160° from the transfer direction, preferably ±170°. More preferably, it may be set at about 180° from the transfer direction. Accordingly, the wind turbine rotor may be directed away from the transfer direction. This may further improve the safety of the transfer, since the risk of a rotor blade contacting the vessel or gangway may be reduced significantly.

The yaw direction may thus be oriented such that the thrust pushes the OWT against the tension of the anchor lines in a direction away from the direction in which a floating vessel may be coupled via a gangway to the OWT, e.g. the transfer direction.

In particular, by adjusting the yaw angle of the OWT, the thrust is generated such that the OWT is moved in a direction determined by the yaw angle until the one or more anchor lines are tensioned and the OWT remains at a stable position.

In a further embodiment, the method further comprises stopping generation of thrust by the wind turbine rotor prior to connecting a gangway from a floating vessel to the OWT. By stopping the wind turbine rotor, safety during the transfer may further be increased.

The method may further comprise connecting a gangway from a floating vessel to the OWT and/or changing operation from the transfer mode to the service mode described further above.

The service mode may for example be engaged prior to connecting the gangway to stabilize floater motion, and/or may be engaged after transfer of personnel and/or equipment to ensure a safe work environment for the service personnel. The method may for example comprise engaging the service mode after the vessel has been moved away from the OWT. Thereby, it may be ensured that no collision takes place between the vessels and the rotor blades that are rotated to damp the oscillating motion.

According to a further embodiment of the invention, a method of operating an offshore wind turbine, OWT, in particular a floating offshore wind turbine, is provided. The method comprises generating, by the OWT, electrical power and/or electrical energy during operation; transmitting at least a part of the generated electrical power and/or electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction; supplying at least a part of the electrical power and/or of the electrical energy to an electrical utility grid, in particular to an onshore electrical utility grid; and performing any of the methods disclosed herein when the OWT is to be serviced.

For example, the method may comprise stopping the power generation and entering the active motion control mode. This may include operating the transfer mode prior to servicing the OWT, e.g. to position the OWT, and/or operating the service mode during a servicing of the wind turbine (e.g. service work within the nacelle), e.g. to reduce nacelle oscillation and provide a safe work environment.

According to a further embodiment of the invention, a control system for controlling a motion of an offshore wind turbine, OWT is provided. The OWT comprises a wind turbine rotor and a generator, wherein the generator is mechanically coupled to the wind turbine rotor and is configured to convert mechanical power to electrical power. The control system is configured to perform the method according to any of the preceding claims. The control system may for example have a respective processing unit and memory, the memory storing control instructions which when executed by the processing unit, cause the processing unit to perform any of the methods described herein.

According to a further embodiment of the invention, an offshore wind turbine, e.g. a floating offshore wind turbine, comprising a respective control system is provided.

According to a further embodiment of the invention, a computer program for controlling the operation of an offshore wind turbine (OWT) is provided. The OWT comprises a wind turbine rotor and a generator, wherein the generator is mechanically coupled to the wind turbine rotor and is configured to convert mechanical power to electrical power. The computer program comprises control instructions which, when executed by a processing unit of a control system of the offshore wind turbine, causes the processing unit to perform any of the methods disclosed herein. The computer program may be provided on a volatile or non-volatile data carrier or storage medium and/or may be provided via a communication connection, such as a wired or wireless network connection.

The computer program may for example be provided as an update for a controller of an existing OWT, e.g. for a wind turbine controller and/or converter controller. The program may for example control the torque and/or force to be applied by setting respective control schemes, e.g. setpoints for generator torque and/or speed to control the rotor torque and/or speed. Such setpoints may for example be provided to a converter controller of a power converter that controls the electrical power provided to the generator accordingly, such that the generator operates as a motor at the respective torque and/or speed.

By such control system, wind turbine, or computer program, advantages similar to those outlined further above with respect to the method may be achieved.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing showing a floating offshore wind turbine moored to the sea floor according to an embodiment.
Fig. 2 is a schematic drawing showing different rotational and translational motions of a floating offshore wind turbine according to an embodiment.
Fig. 3 is a schematic drawing showing an offshore wind turbine according to an embodiment.
Fig. 4 is a flow diagram illustrating a method of controlling a motion of an offshore wind turbine according to an embodiment.
Fig. 5 is a flow diagram illustrating a method of controlling a motion of an offshore wind turbine according to an embodiment.
Fig. 6 is a schematic drawing showing a floating offshore wind turbine the translational motion of which is controlled according to an embodiment.
Fig. 7 is a flow diagram illustrating a method of controlling a motion of an offshore wind turbine according to an embodiment.
Fig. 8 is a schematic diagram illustrating an amplitude of an oscillating motion of an offshore wind turbine in horizontal directions.
Fig. 9 is a schematic diagram illustrating yaw angle ranges associated with a vibration risk for an offshore wind turbine.
Figs. 10 and 11 are schematic diagrams illustrating control curves for controlling a torque application by a generator to a wind turbine rotor according to an embodiment.
Figs. 12 and 13 are schematic drawings illustrating the application of a damping torque and/or force to an offshore wind turbine by applying torque to the wind turbine rotor according to an embodiment.

### DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

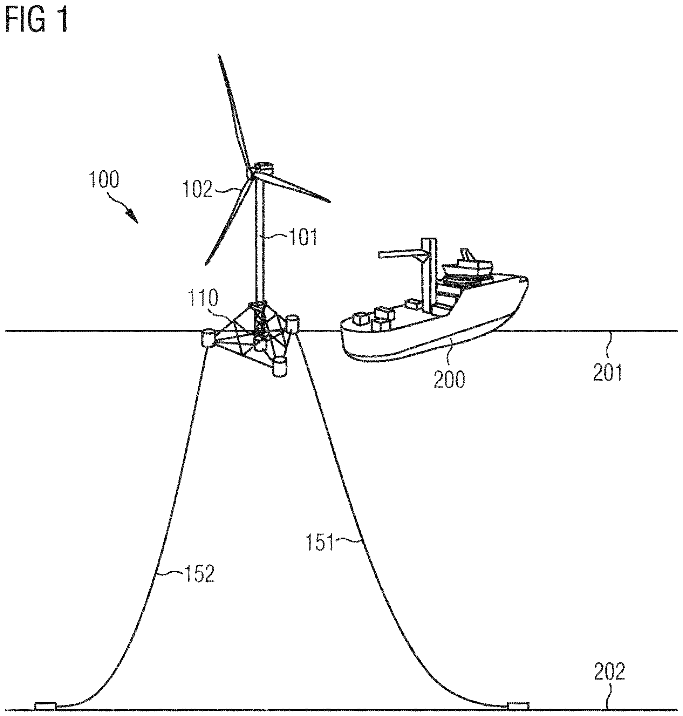

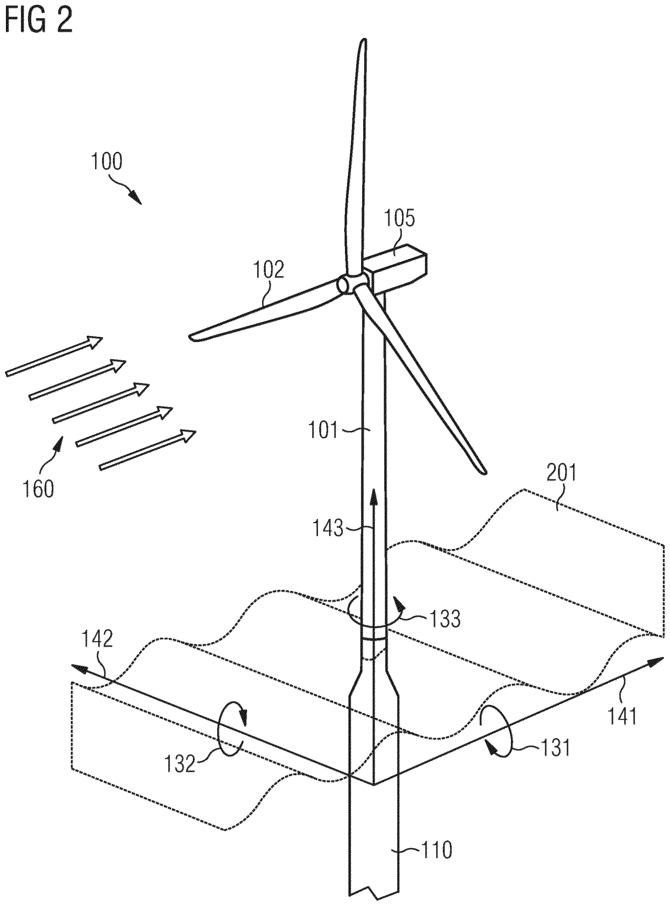

Fig. 1 schematically illustrates an offshore wind turbine 100 in form of a floating offshore wind turbine (FOWT). FOWT 100 comprises a wind turbine tower 101 and a wind turbine rotor 102, wherein tower 101 is supported by a floater 110. Any type of floater may be used, such as a spar type (see Fig. 2) or a semi-submersible type as shown in Fig. 1. Floater 110 is moored by a mooring system that comprises more than two, generally at least three anchor lines 151, 152 that are anchored to the sea floor 202. Anchor lines 151, 152 generally have a certain slag, so that the wind turbine 100 can move within a certain area, which may for example have a size of about 40x40 m in x/y direction (in the horizontal plane). For servicing wind turbine 100, floating vessels 200 are generally employed. During such service operation, service personnel and equipment is transferred via a gangway and/or a hoist to wind turbine 100, and service technicians may have to perform service operations within a nacelle of the wind turbine, as mentioned above.

Fig. 2 illustrates the motions that the wind turbine 100 floating on the sea surface 201 may make under the influence of the environmental conditions, such as currents, waves, wind and the like. The directions are generally referenced to the orientation of the wind turbine rotor 102 mounted to nacelle 105 or supported directly to the top of tower 101. Rotational motions include the roll motion 131, which causes the nacelle 105 to oscillate from side to side. Further, the pitch rotational motion 132 causes fore-aft oscillations of the wind turbine 100. The yaw rotational motion 133 corresponds to a rotation of the whole structure 133 about a vertical axis, which is not to be confused with the controlled yaw angle adjustment by operating the yaw drive of the wind turbine, which may turn the rotor 102 with respect to the tower 101. Translational motions include the surge motion 141, the sway motion 142 and the heave motion 143 in vertical direction. As these motions are defined with respect to the orientation of the wind turbine rotor 102, their orientation in absolute terms may change if the yaw drive of the wind turbine is operated to change the direction into which the wind turbine rotor 102 points.

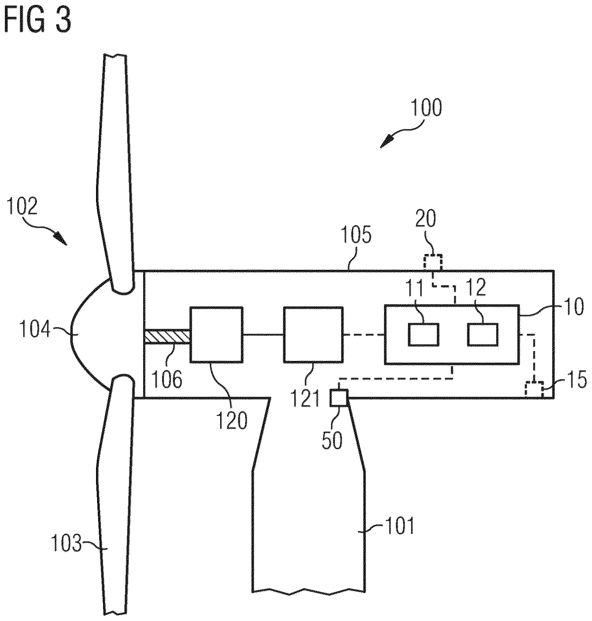

Fig. 3 illustrates an exemplary implementation of wind turbine 100. Wind turbine rotor 102 may comprise a hub 104 and rotor blades 103. Rotor 102 may be supported by a main shaft 106 supported by main bearings, and main shaft 106 may be rotationally coupled to a generator 120, either directly or indirectly via a gearbox. Power converter 121 may be configured to convert at least part of the electrical power generated by generator 120 (e.g. in a DFIG topology) or may be configured to convert all electrical power generated by generator 120 (e.g. in a full converter topology). A control system 10 of the wind turbine may control the power converter 121. Control system 10 may for example comprise a wind turbine controller and a converter controller, and any other controllers facilitating the operation of wind turbine 100. In conventional operation, control system 10 may, via controlling power converter 121, control the electrical torque of generator 120 so as to control the rotational speed of the wind turbine rotor 102 according to a maximum power point tracking control scheme. Wind turbine 100 may further comprise a yaw drive 50 controllable by control system 10, by which the orientation of the wind turbine rotor 102 relative to the tower 101 can be controlled, e.g. by rotating nacelle 105.

Control system 10 may include a processing unit 11 coupled to a memory 12. Processing unit 11 may be a micro-processor, a digital signal processor, an application-specific integrated circuit, or the like. Memory 12 may comprise RAM, ROM, Flash-Memory, a hard disk drive and other types of memory. Memory 12 may store control instructions which, when executed by processing unit 11, cause the control system 10 to perform any of the methods disclosed herein. Control system 10 may be distributed to plural controllers and may accordingly comprise plural processing units and plural memories. Control system 10 may comprise further components common to such control system, for example input/output interfaces, a system bus, a user interface and the like. Control system 10 is operable in an active motion control mode, e.g. in a transfer mode and/or service mode described in more detail further below.

It has been found that such floating offshore wind turbine 100 is difficult to service for several reasons. As the wind turbine moves around on the sea surface 201 in sway and surge directions, it is difficult to transfer equipment and personnel onto the wind turbine, since the gangway may become disengaged or since the wind turbine may drift into the floating vessel 200. Further, the oscillating motion of tower and nacelle, e.g. the roll and/or pitch rotational motion, may make such transfer more difficult, as the floater rolls about the respective rotational directions. Further, work within the nacelle 105, which generally has to be performed during servicing, may become increasingly difficult due to the large oscillation amplitude that the nacelle 105 may carry out even in small swell. There are accordingly only very few and short time windows during which the sea surface and other environmental conditions are calm enough to perform such servicing.

Embodiments of the present invention thus propose operation of the wind turbine 100 in an active motion control mode in which the motion of wind turbine 100 is controlled. This may occur by operating the wind turbine rotor 102 by means of the generator 120. The generator 120 may be operated in a motor mode in which it applies a torque to the rotor 102, whereby the rotor 102 may be rotated at certain speed to generate thrust, which allows control of a translational motion of the wind turbine, or to generate counter-torque or force that counteracts an oscillating motion of the wind turbine 100, that for example counteracts the roll motion 131. In particular, control system 10 may control via the power converter 121 the generator currents to cause generator 120 to act as a motor. Power converter 121 is thus essentially employed as a drive, it may be operated similar to a variable speed drive or a drive that applies a controlled torque.

The rotor 102 including hub 104 and blades 103 has a relatively high mass and thus inertia, which may be used for stabilizing oscillating motions of the wind turbine 100, e.g. nacelle side-to-side motions. When a large torque is applied by the generator 120 to the rotor 102, the counter-torque acts on the structure by which the rotor 102 is supported, e.g. on the main bearings, the generator, or any other structure depending on the configuration. Via this structure, the torque/force is transferred to the nacelle 105 or directly to the upper part of the tower 101. The operation may now be controlled such that the respective force and/or torque that acts on the upper part of tower 101, e.g. at the tower top on which the nacelle, or any other structure that supports the rotor 102, is mounted, counteracts the motion to be damped.

Similarly, when rotating the rotor 102, the resulting thrust force will generally act on the components on which rotor 102 is supported, such as on the main bearings of the main shaft 106 or the suspension of a direct drive or the like. Again, the respective thrust force is transferred via the supporting elements, for example via the nacelle 105, to the upper part of tower 101, e.g. to the tower top. Such thrust force may accordingly allow controlling the translational motion of wind turbine 100.

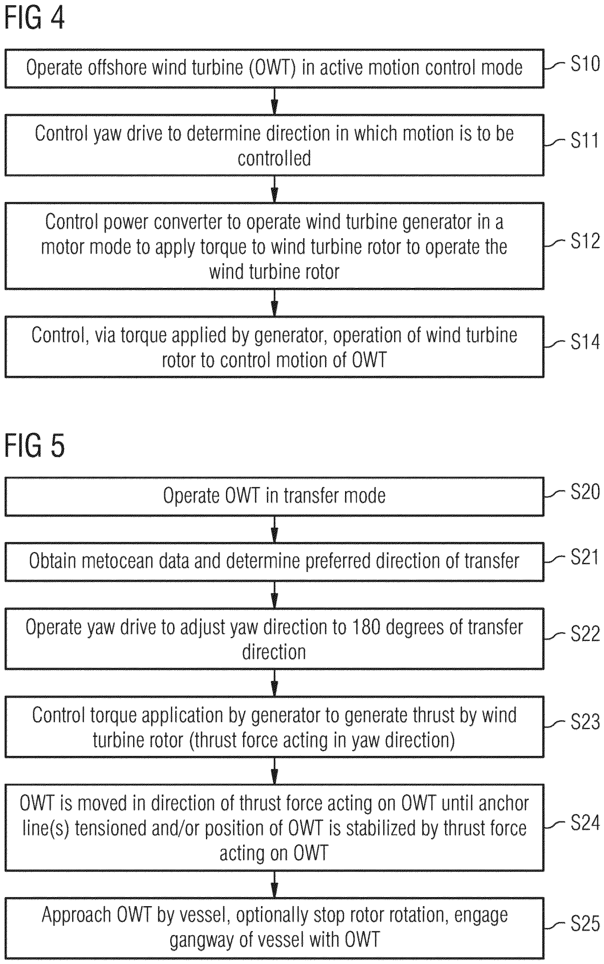

Fig. 4 illustrates a flow diagram of a respective method of controlling the motion of an offshore wind turbine 100. In step S10, operation of the wind turbine 100 occurs in the active motion control mode. Power generation by the wind turbine 100 may be shut down prior to entering such mode. Wind turbine 100 may thus be brought into a standby state or idle state prior to entering the mode.

In step S11, the yaw drive 50 is operated to control the direction in which the motion is to be controlled. For example, when damping an oscillating motion, rotor 102 may be oriented such that the rotor plane is essential parallel to the direction in which the oscillation is to be damped. For translational motion control, the rotor 102 may be oriented into the direction into which translational motion or motional stabilization is to occur.

In step S12, the power converter 121 is controlled to operate the wind turbine generator 120 in a motor mode to apply torque to wind turbine rotor 100 to operate the wind turbine rotor. Thereby, a respective counter-torque and/or force, or a respective thrust force may be generated. By controlling the torque applied by generator 120, the operation of the wind turbine rotor 102 can be controlled, in particular the torque and/or force generated by the rotor. Accordingly, the motion of the wind turbine 100 can be controlled this way (step S14). Such method may accordingly allow both, damping a respective rotational motion of the wind turbine and controlling translational motion of the wind turbine, for example by bringing the wind turbine into a particular position and stabilizing the wind turbine at that position. This may significantly facilitate the servicing of the wind turbine, such as the transferring of equipment and/or service personnel and the performing of service within the wind turbine. Safety during servicing may furthermore be increased.

Fig. 5 is a flow diagram illustrating a particular example of translational motion control. The active motion control mode may for example comprise a transfer mode which is entered in step S20. Such transfer mode may have the purpose of enabling a safe and secure transfer of service personnel onto the wind turbine, and/or preventing a collision between wind turbine and floating vessel 200.

In step S21, metocean data, which may include wind conditions, wave conditions, currents, and/or the like, is obtained and a preferred direction of transfer is determined therefrom. The transfer direction may be the direction from the wind turbine to the vessel during the transfer, e.g. the direction in which a gangway is coupled between the wind turbine and the vessel. The preferred direction of transfer may for example be chosen such that for the prevailing wind and wave conditions, a safe transfer can be achieved, for example a direction in which severe heave and rolling motions of the vessel are prevented. The transfer direction may be determined automatically or may be set manually. In step S21, yaw drive 50 is operated to yaw the wind turbine rotor to a direction that is 180° from the transfer direction. The wind turbine may accordingly point into a direction that is opposite to the direction into which the transfer is supposed to take place. In other implementations, the wind turbine rotor may be yawed to a different direction, such as smaller than 180°, which may take into account the actual wind direction, currents and the like, which may require making respective corrections for the direction into which the rotor is supposed to point.

In step S23, the generator is operated as a motor, and the torque application by the generator to the wind turbine rotor is controlled. In particular, the wind turbine rotor is rotated so as to generate thrust. The thrust force may act in the yaw direction, i.e. in the direction into which the rotor points. Thrust may for example be controlled by setting the rotational speed of the wind turbine rotor and/or optionally by pitch settings of the rotor blades 103. The thrust force generated by rotor 102 will act on the upper part of tower 101 and will as a result cause translational motion of the wind turbine 100 in the thrust direction. The wind turbine 100 will thus move until the anchor lines are tensioned (step S24). If the anchor lines are already tensioned in the respective direction, the position of the wind turbine will be stabilized at the respective position by the thrust force acting on the wind turbine and acting against the already tensioned anchor line(s).

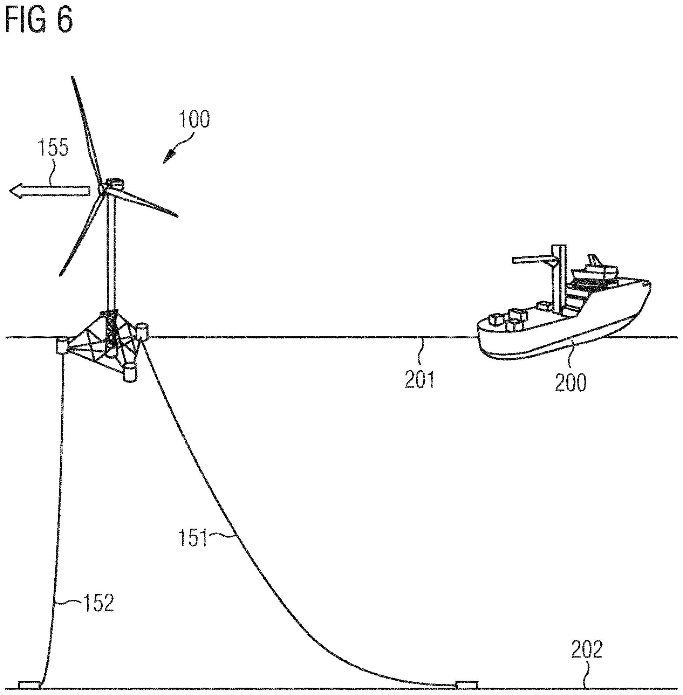

Fig. 6 illustrates a respective example, wherein the wind turbine 100 has been operated to generate a thrust force indicated by the arrow 155. Accordingly, the anchor line 151 has been tensioned, so that the thrust force now acts against the anchor line 151. Consequently, the position of wind turbine 100 is stabilized at the position illustrated in Fig. 6, and translational motion of wind turbine 100 is controlled by restricting the translational motion to this stable position. It is noted that although only two anchor lines are shown in Fig. 6, there will generally be more anchor lines mooring the floating wind turbine 100, and accordingly, further anchor lines may be tensioned at the stable position.

Turning back to Fig. 5, in step S25, the floating wind turbine can now be approached by vessel 200, wherein the risk that the wind turbine drifts into the vessel can be reduced significantly due to the stable position. Further, a gangway may be engaged between the vessel and the wind turbine 100 for effecting the transfer of service personnel. The risk that the wind turbine drifts away from the vessel and thereby the gangway becomes disengaged may likewise be reduced significantly due to the stable wind turbine position. Optionally, prior to engaging the gangway, the rotation of the wind turbine rotor 102 may be stopped. This may further improve safety, as the risk of a collision between the wind turbine rotor and the gangway or any other part of vessel 200 may be reduced significantly. However, as the rotor generally points away from the transfer direction, such risk is already relatively low.

It is in particular noted that such floating vessel 200 generally employs dynamic positioning, which keeps the vessel at a set of predetermined absolute coordinates (e.g. GPS coordinates). Therefore, if the vessel keeps a stable position, whereas the wind turbine 100 is allowed to float within an area of size 40 by 40 m, it becomes clear that there is a significant risk of collision and/or gangway disconnection. Accordingly, by providing the stable position by generating thrust using the wind turbine rotor, significant safety improvements may be achieved.

The transfer direction may for example be chosen such that the wind direction acts in the same direction as the thrust direction 155. This may particularly be beneficial in high wind conditions, so that the wind does not push the wind turbine in the opposite direction. If wind speeds are relatively low but high currents exist, then the transfer direction may be chosen such that the thrust direction 155 essentially corresponds to the direction of the strongest current. Accordingly, by such choice of the transfer direction, the current may not push the wind turbine onto the vessel during the transfer but will rather support the stabilization of the wind turbine's position. The weather windows during which the transfer may take place may thus be increased significantly, as much higher currents and wind conditions as well as higher waves may be present during the transfer. Thus, servicing is facilitated and the uptime of the wind turbine may be increased. Costs may further be reduced and energy generation improved.

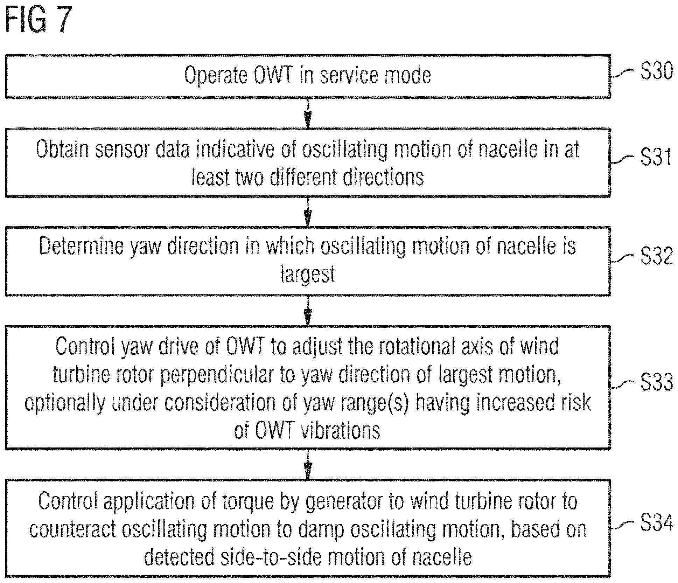

Fig. 7 is a flow diagram illustrating operation of the wind turbine in a service mode, which may form part of the active motion control mode. In the service mode, side-to-side motion of nacelle 105, and in particular the roll motion 131, is damped. In step S31, sensor data indicative of the oscillation motion of the nacelle in at least two different directions is obtained. Such data may for example be obtained by one or more sensors 15 of wind turbine 100, or from other data sources, such as from external data sources including wave buoy, wave radar, or communicating data connections to other information sources. Sensors 15 may be provided at different locations on and/or within the wind turbine or may be substituted by a respective communication connection over which sensor data may be received.

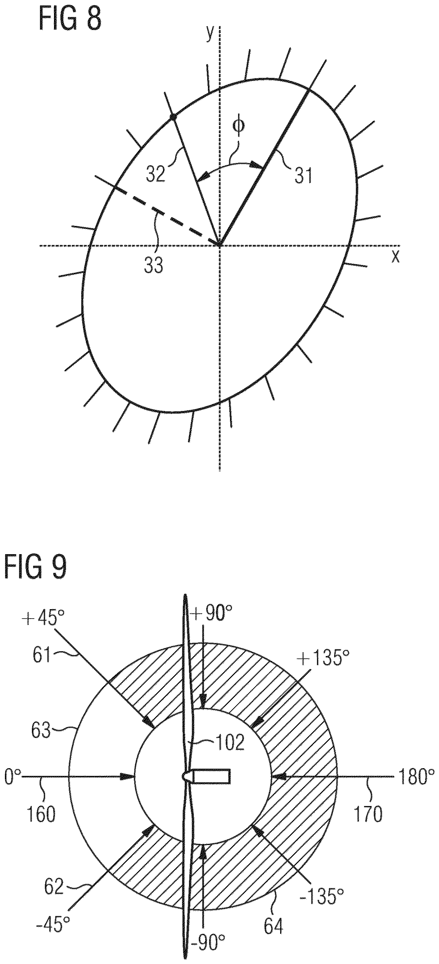

For example, oscillation corresponding to the rolling motion 131 and the pitch motion 132 may be monitored and respective measurement values may be obtained. Sensors may include accelerometers, inclination sensors, and inertia measurement unit (IMU), or data from positioning systems, such as global navigation satellite systems (GNSS), including GPS, Galileo and the like. Fig. 8 illustrates results of respective monitoring. Fig. 8 illustrates the oscillation amplitude in the horizontal directions x and y. Reference sign 32 indicates the current heading of the nacelle. It can be seen that the amplitude of oscillation differs in different directions.

In step S32, the yaw direction in which the oscillation motion of the nacelle is largest is determined. In Fig. 8, this is the direction 31, wherein the yaw angle is the angle in the horizontal plane. Accordingly, the direction 31 of the largest oscillation amplitude occurs at a yaw angle Φ from the current nacelle heading. In order to damp the largest oscillation amplitude, the yaw drive 50 of the wind turbine is controlled in step S33 to yaw the wind turbine rotor such that the axis of rotation of the wind turbine rotor is substantially perpendicular to the yaw direction 31 of the largest oscillating motion. The target yaw direction 33 is illustrated in Fig. 8, and the nacelle is accordingly yawed by the angle 90°-Φ. In other words, the rotor is yawed so that the direction of the largest oscillation motion is substantially parallel to the rotor plane or perpendicular to the rotation axis of rotor 102.

In step S34, the application of torque by the generator 120 to the wind turbine rotor 102 is controlled to counteract the oscillating motion to damp the oscillating motion. This may occur based on the detected side-to-side motion of the nacelle, e.g. based on the sensor data obtained in step S31. Respective sensor data may be obtained throughout the torque application so as to be able to adjust the torque application to efficiently damp the oscillations. Feedforward and/or feedback control may for example be employed.

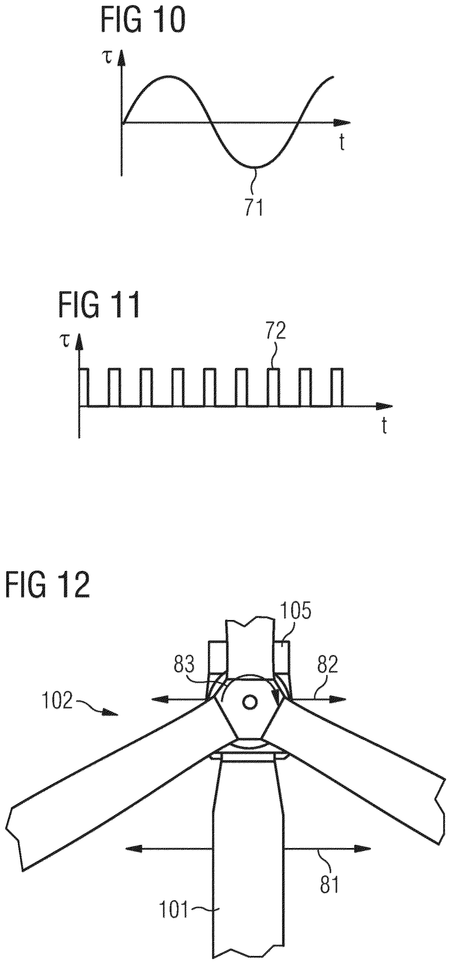

Figs. 10 and 11 show respective signals for applying torque by the generator to the wind turbine rotor to damp respective oscillating motions of the wind turbine. Fig. 12 shows the upper part of tower 101 with the nacelle 105 and rotor 102. Roll motion of the floater causes the side-to-side movement of the upper part of tower 101 including nacelle 105, arrow 81 indicating the structural movement force. By applying torque to rotor 102, the rotor inertia is employed to generate a counter-force/torque as indicated by arrows 82. Numeral 83 indicates the torque application to the rotor.

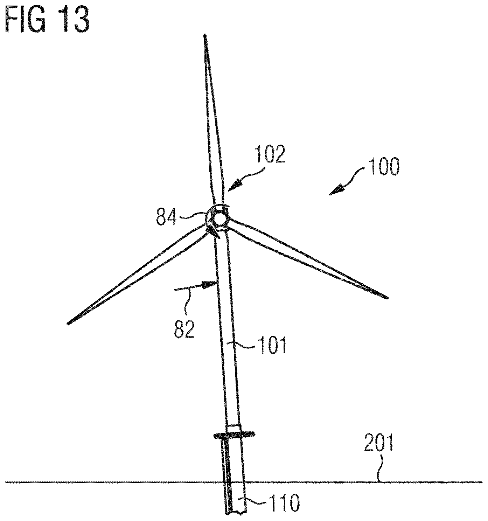

Based on the detected side-to-side motions, the torque application is now controlled so that the resulting force 82 counteracts the side-to-side motion, as shown in Fig. 13. Numeral 84 indicates the direction of rotation of the rotor 102. The oscillating motion may for example be damped by applying a counter-force or -torque on each side of the motion, or only on one side of the motion.

The control curve of Fig. 10 for example applies a torque τ that rotates the rotor 102 back and forth, so that during each half wave of the oscillation amplitude, the oscillating motion is damped. The shape of the curve is here a sinusoidal curve; however, other shapes may be employed as well. For example, for applying a larger torque, a steeper slope may be chosen such as a steep pulse (e.g. step), and the curve 71 may accordingly comprise pulses in positive and negative torque directions.

Fig. 11 illustrates a control curve 72 in which the torque is applied in one direction, so that the counter-force/torque may only act during one half wave of the oscillating motion of the wind turbine. The waveform here is a train of pulses, which has the advantage that the steeper flank generates a higher damping torque/force, thus improving the damping. In other implementations, waveform 72 may also be smoother, or may correspond to a rectified sinusoidal. Any wave form for controlling the torque between the two extremes of Fig. 10 and Fig. 11 are also conceivable, such as a wave form with positive and negative pulses. Accordingly, by generating respective counter-forces and/or torques, an efficient damping of the oscillating motion of a wind turbine may be achieved. In particular, this may be achieved in the direction of the largest amplitude of the oscillating motion.

Steps S32 and S33 are optional. In other implementations, the yaw direction into which the wind turbine rotor is adjusted prior to starting the damping may be set manually, for example by an operator. The yaw direction manually set may for example be chosen so as to enable a safe transfer onto the wind turbine. It may be set by remote control, e.g. using a SCADA interface, or may be selected directly on the turbine (e.g. using a HMI). Such manual setting of the yaw direction prior to engaging the damping may for example be advantageous for facilitating both landing and access to the turbine. It may also be set according to the service task to be performed.

Further, as indicated in step S33, setting the yaw angle may consider a risk of wind turbine vibrations. Examples of vibrations are vortex-induced vibrations (VIV) and stall-induced vibrations (SIV). For example, the blades may vibrate in phase in an out of plane motion. Such vibrations may occur when the turbine is not yawed upwind. Fig. 9 illustrates a respective diagram that shows a wind direction 160 and the wind turbine rotor 102 aligned upwind. 170 indicates the downwind direction. The yaw angle range 63 between the yaw angles 61 and 62 (±45°) is a range in which the risk of respective vibrations is relatively low. In the yaw angle range 64, the risk for turbine vibrations may be higher.

In an example, when adjusting the yaw angle of the wind turbine in step S33, the target yaw angle 33 may be set such that the angle range 64 of increased risk is avoided, i.e. is not set within this range. For determining the yaw angle range 63 (and thus the range 64 to be avoided), the wind direction 160 may be measured using a wind sensor 20, and the control system may obtain respective measurement data. Alternatively, the control system may obtain the measurement data via a communication connection, e.g. from an external wind sensor.

Another possibility may be to find a balance between providing an optimum direction for the dampening and reducing the risk of turbine vibrations. For example, a cost function or weighting function may be employed that finds a target yaw angle 33 that maximizes the oscillation amplitude in the direction of the wind turbine rotor plane while minimizing the risk of turbine vibrations. The target yaw angle 33 may be determined this way, and step S33 may control the yaw drive to set the rotor to such target yaw angle. The rotational axis of the wind turbine rotor may in this case not be perpendicular to the yaw direction of the largest oscillating motion, but may still be aligned with a relatively large oscillation amplitude, so that an efficient damping may be achieved.

The service mode may for example be engaged after the transfer of service personnel onto the wind turbine, so that the nacelle oscillating motion is efficiently damped while service personnel operates in the nacelle. It may also be engaged prior to transferring personnel from a vessel, since it may result in less movements of the floating structure, in particular in a damped roll motion, thus making the transfer safer. Due to the tower height, even in small seas, the nacelle may be moved by more than 1 m to each side, which may significantly reduce the ability of technicians to work within the nacelle. This may efficiently be prevented by the damping.

Any of the embodiments and examples described herein may be combined. For example, for performing a service operation, the transfer mode as described with respect to Fig. 5 may first be engaged, in order to stabilize the position of the wind turbine. The gangway may then be engaged and service personnel, e.g. 10 to 20 technicians, and service equipment, such as spare parts, may be transferred onto the wind turbine 100. After disengagement of the gangway, the vessel 200 may be brought into safe distance, and the service mode may be engaged in order to damp the oscillating motion of the wind turbine. Safety and efficiency of the servicing operation may thereby be improved. Further, the system may be relatively easy to install, since it may be implemented by updating the control software of the wind turbine in order to allow operation of the wind turbine in the active motion control mode, e.g. in the transfer mode and/or in the service mode.

It should be clear that several modifications may be made. For example, in the transfer mode, the rotor may be pitched or rotated such that the thrust force acts in a different direction, thus allowing a vessel to approach the wind turbine not from the side of the tensioned anchor line, but from the side of the slack anchor line. Further, the transfer mode may be stopped prior to engaging the gangway or may continue to operate while the gangway is engaged, or the service mode may be engaged prior to engaging the gangway and may be maintained thereafter.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of controlling a motion of an offshore wind turbine, OWT, wherein the OWT (100) comprises a tower (101), a wind turbine rotor (102), and a generator (120), wherein the generator (120) is mechanically coupled to the wind turbine rotor (102) and is configured to convert mechanical power to electrical power, wherein the method comprises operating the OWT in an active motion control mode in which a motion of the OWT is controlled, wherein operation in the active motion control mode comprises:
operating the wind turbine rotor (102) to cause an application of a torque and/or force to an upper part of the tower (101) of the OWT to control the motion of the OWT, wherein the wind turbine rotor (102) is operated by actively controlling a torque applied by the generator (120) to the wind turbine rotor (102).

2. The method according to claim 1, wherein the generator (120) of the OWT does not generate electrical power in the active motion control mode.

3. The method according to claim 1 or 2, wherein actively controlling a torque applied by the generator (120) to the wind turbine rotor (102) comprises operating the generator (102) in a motor mode in which the generator receives electrical power and uses the received electrical power to generate the torque.

4. The method according to any of the preceding claims, wherein the method further comprises operating a yaw drive (50) of the OWT to control a direction in which the force and/or torque is applied when operating the wind turbine rotor (102).

5. The method according to any of the preceding claims, wherein the active motion control mode comprises a service mode in which the wind turbine rotor (102) is operated to damp an oscillating motion of a nacelle (105) of the OWT (100).

6. The method according to claim 5, wherein to damp the oscillating motion, the generator (120) is controlled to rotate the wind turbine rotor (102) in accordance with a control scheme configured to counteract the oscillating motion of the OWT, wherein the control scheme preferably comprises a first operating mode comprising an alternating clockwise and counter-clockwise rotation of the wind turbine rotor (102) and/or a second operating mode comprising a modulated rotation of the wind turbine rotor (102) in one direction of rotation.

7. The method according to claim 6, wherein in the first and/or second operating mode, the generator (120) is controlled to apply a pulsed torque to the wind turbine rotor.

8. The method according to any of claims 5-7, further comprising yawing the OWT, in particular a nacelle (105) thereof, such that an angle between a yaw direction of a rotor plane of the wind turbine rotor (102) and a yaw direction of a maximum oscillation amplitude (31) of the oscillating motion is reduced, or yawing the OWT (100) to a predetermined yaw direction.

9. The method according to claim 8, wherein the yawing of the OWT comprises determining the yaw angle (33) to which the OWT is to be yawed under consideration of one or more yaw angle ranges (64) defined with respect to a wind direction (160) and associated with an increased risk of wind turbine vibration, wherein the yaw angle (33) is determined to avoid the one or more yaw angle ranges (64) and/or to reduce the risk.

10. The method according to any of the preceding claims, wherein the active motion control mode comprises a transfer mode in which the wind turbine rotor (102) is operated to generate a thrust force (155) that acts on the OWT (100) to move the OWT and/or stabilize a position of the OWT.

11. The method according to claim 10, wherein the OWT is moved by the thrust force (155) until one or more anchor lines (151) that moor the OWT are tensioned.

12. The method according to claim 10 or 11, further comprising determining a transfer direction in a yaw direction of the OWT in which a transfer is to take place between the OWT (100) and a floating vessel (200), and controlling a yaw angle of the wind turbine based on the transfer direction, preferably such that the yaw angle is set outside a range between +/- 160 degrees, preferably +/- 170 degrees, from the transfer direction, or is more preferably set at about 180 degrees to the transfer direction, so that the wind turbine rotor is directed away from the transfer direction.

13. A method of operating an offshore wind turbine, OWT, in particular a floating offshore wind turbine, wherein the method comprises:
generating, by the OWT (100), electrical power and/or electrical energy during operation;
transmitting at least a part of the generated electrical power and/or electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction;
supplying at least a part of the electrical power and/or of the electrical energy to an electrical utility grid, in particular to an onshore electrical utility grid; and
performing a method according to any of the preceding claims when the OWT (100) is to be serviced.

14. A control system for controlling a motion of an offshore wind turbine, OWT, wherein the OWT (100) comprises a tower (101), a wind turbine rotor (102), and a generator (120), wherein the generator (120) is mechanically coupled to the wind turbine rotor (102) and is configured to convert mechanical power to electrical power, wherein the control system (10) is configured to perform the method according to any of the preceding claims.

15. A computer program for controlling the operation of an offshore wind turbine, OWT, wherein the OWT (100) comprises a tower (101), a wind turbine rotor (102), and a generator (120), wherein the generator (120) is mechanically coupled to the wind turbine rotor and is configured to convert mechanical power to electrical power, wherein the computer program comprises control instructions which, when executed by a processing unit (11) of a control system (10) of the offshore wind turbine (100), causes the processing unit (11) to perform the method of any of claims 1-13.
